# EUROPEAN PATENT APPLICATION

(11) **EP 4 663 932 A1**
(43) Date of publication of application: **17.12.2025**
(21) Application number: 25180779.8
(22) Date of filing: 04.06.2025
(51) Int. Cl.: F02D 41/00

(54) **EXHAUST GAS RECIRCULATION SYSTEM FOR ENGINE AND METHOD OF CONTRLOING EXHAUST GAS RECIRCULATION SYSTEM FOR ENGINE**

(30) Priority: 11.06.2024 JP 2024094240
(71) Applicant: MAZDA MOTOR CORPORATION, Hiroshima 730-8670 (JP)
(72) Inventor: MURAKAMI, Shingo, Hiroshima, 730-8670 (JP); AIZAWA, Kazuaki, Hiroshima, 730-8670 (JP); INOUE, Atsushi, Hiroshima, 730-8670 (JP); NAGAE, Makoto, Hiroshima, 730-8670 (JP); MIYAMOTO, Toru, Hiroshima, 730-8670 (JP); SUNAGARE, Yugou, Hiroshima, 730-8670 (JP); ODA, Yusuke, Hiroshima, 730-8670 (JP); KONISHI, Shoma, Hiroshima, 730-8670 (JP); HAYASHI, Shunichiro, Hiroshima, 730-8670 (JP); MATOBA, Yasunori, Hiroshima, 730-8670 (JP)
(74) Representative: Müller-Boré & Partner Patentanwälte PartG mbB

(57) **Abstract**

An EGR passage 41 and an EGR valve 43 that opens/closes the EGR passage 41 to change an EGR amount as an amount of EGR gas to be recirculated to an intake passage 20 are provided. When an engine E is operated in an EGR region A1, EGR control is executed to recirculate the EGR gas by opening the EGR valve 43. In addition, in the case where an intake air temperature detected by an intake air temperature sensor SN3 is lower than a predetermined first set temperature, the EGR control is prohibited even when the engine E is operated in the EGR region A1 under a condition that an intake air flow rate as a flow rate of intake air flowing through the intake passage 20 is lower than a predetermined set flow rate.

## Description

### [Technical Field]

The present invention relates to an exhaust gas recirculation system for an engine and a method of controlling an exhaust gas recirculation system for an engine.

### [Background Art]

As disclosed in Patent Literature 1, it has been known to execute EGR control, in which EGR gas as a part of exhaust gas that flows through an exhaust passage is recirculated into an intake passage, in an engine that is provided in a vehicle, or the like. More specifically, Patent Literature 1 discloses an engine that includes: an EGR passage that connects the exhaust passage and the intake passage; and an EGR valve that opens/closes the EGR passage, and that adjusts an opening amount of the EGR valve according to an operating condition.

### [Citation List]

### [Patent Literature]

[Patent Literature 1] JP2021-105352A

### [Summary]

### [Technical Problem]

The EGR gas mainly contains inert gas. Accordingly, when the EGR control is executed to recirculate the EGR gas into the intake passage, heat capacity of the gas in a combustion chamber of the engine is increased to reduce a combustion temperature, and engine performance can thereby be improved. For example, the reduction in the combustion temperature suppresses generation of NOx.

However, in the case where the EGR control is executed when a temperature of an intake air, which is air flowing through the intake passage, is low, due to the low temperature of the intake passage and a small saturated water vapor amount of the intake air, moisture in the EGR gas is condensed in the intake passage, and condensed water is likely to be accumulated in the intake passage. When condensed water is accumulated in the intake passage, and the accumulated condensed water flows into the combustion chamber at once, misfire possibly occurs.

The invention has been made in view of a circumstance as described above and therefore has a purpose of providing an exhaust gas recirculation system for an engine capable of improving engine performance while avoiding misfire.

### [Solution to Problem]

The above problem is solved by the present invention as defined in independent claims. Particularly, the invention is an exhaust gas recirculation system for an engine including: an engine body that is formed with a combustion chamber; an exhaust passage that is connected to the engine body and through which exhaust gas introduced from the engine body flows; and an intake passage that is connected to the engine body and through which intake air to be introduced into the engine body flows. The exhaust gas recirculation system includes: an intake air temperature sensor that detects an intake air temperature as a temperature of the intake air; an EGR passage that connects the exhaust passage and the intake passage to recirculate EGR gas as a part of the exhaust gas to the intake passage; an EGR valve that opens and/or closes the EGR passage to change an EGR amount that is an amount of the EGR gas to be recirculated to the intake passage; and a controller that executes EGR control for recirculating the EGR gas by opening the EGR valve when the engine is operated in a preset EGR region. In the case where the intake air temperature that is detected by the intake air temperature sensor is lower than a predetermined first set temperature, the controller prohibits the EGR control even when the engine is operated in the EGR region under a condition that an intake air flow rate as a flow rate of the intake air flowing through the intake passage is lower than a predetermined set flow rate.

According to the invention, when the engine is operated in the EGR region, the EGR control is executed, and the EGR gas as inert gas is recirculated to the intake passage and thus to the combustion chamber. Thus, engine performance can be improved by an effect of reducing a combustion temperature by the EGR control. For example, when the invention is applied to an engine having an ignition plug, it is possible to suppress an increase in the combustion temperature associated with ignition advance by action of the EGR control even when ignition timing is advance timing. Therefore, it is possible to prevent an excessive temperature increase of the exhaust gas while securing engine output.

In addition, the EGR control is prohibited under the condition that the intake air temperature is lower than the first set temperature and the intake air flow rate is lower than the set flow rate. Under the above condition, despite a fact that condensed water caused by the EGR gas is likely to be produced in the intake passage due to the low intake air temperature, the condensed water cannot sufficiently be blown toward the combustion chamber by the intake air due to the small intake air flow rate. As a result, under the above condition, the condensed water is likely to be accumulated in the intake passage. To handle this, in the invention, since the recirculation of the EGR gas is stopped under the above condition, it is possible to prevent the accumulation of the condensed water in the intake passage. Therefore, when the intake air flow rate is increased, or the like, it is possible to prevent a large amount of the condensed water, which is stored in the intake passage, from being introduced into the combustion chamber, and consequently, occurrence of misfire.

In the above configuration, particularly, when the intake air temperature is lower than the first set temperature, the controller determines whether the engine is operated in a predetermined low-temperature EGR region (or lower-temperature EGR region) in the EGR region, and executes the EGR control when the engine is operated in the low-temperature EGR region, the low-temperature EGR region being set in advance in a region where the intake air flow rate is equal to or higher than the set flow rate. In other words, when the intake air temperature is lower than the first set temperature, the controller executes the EGR control when the engine is operated in a region where the intake air flow rate is equal to or higher than the set flow rate in the EGR region.

According to this configuration, when the intake air temperature is lower than the first set temperature, it is determined whether the engine is operated in the low-temperature EGR region. In this way, it is possible to determine whether to execute the EGR control.

For example, the low-temperature EGR region is set such that at least one of a requirement that a lower limit value of an engine speed in the low-temperature EGR region is higher than a lower limit value of the engine speed in the EGR region and a requirement that a lower limit value of an engine load in the low-temperature EGR region is higher than a lower limit value of the engine load in the EGR region is satisfied.

In the above configuration, particularly, during execution of the EGR control, the controller controls the EGR valve such that a maximum value of the EGR amount becomes smaller when the intake air temperature is lower than the first set temperature than when it is higher.

According to this configuration, when the intake air temperature is lower than the first set temperature, and moisture in the EGR gas is easily condensed, the EGR amount that is recirculated to the intake passage is suppressed to be small. Therefore, it is possible to reduce the amount of the condensed water produced in the intake passage and thus to reliably prevent the misfire caused by the condensed water.

In the above configuration, particularly, during execution of the EGR control, the controller controls the EGR valve such that the EGR amount becomes smaller when the intake air temperature is lower than a predetermined second set temperature, which is lower than the first set temperature, than when the intake air temperature is equal to or higher than the second set temperature.

According to this configuration, when the intake air temperature is lower than the second set temperature and thus the moisture in the EGR gas is easily condensed, the EGR amount that is recirculated to the intake passage is suppressed to be small. Therefore, it is possible to reduce the amount of the condensed water produced in the intake passage and thus to further reliably prevent the misfire caused by the condensed water.

In the above configuration, particularly, the controller prohibits the EGR control when the intake air temperature is lower than a predetermined third set temperature that is lower than the second set temperature.

According to this configuration, when the intake air temperature is lower than the third set temperature and thus the moisture in the EGR gas is further easily condensed in the intake passage, the recirculation of the EGR gas is stopped. Therefore, it is possible to prevent the condensed water from being produced in the intake passage by the EGR gas and thus to further reliably prevent the misfire.

### [Advantageous Effect]

As it has been described so far, according to the invention, it is possible to improve the engine performance while avoiding the misfire.

### [Brief Description of Drawings]

[FIG. 1] FIG. 1 is a view illustrating a configuration of an engine according to an embodiment of the invention.
[FIG. 2] FIG. 2 is a diagram illustrating a control block of the engine.
[FIG. 3] FIG. 3 is a view illustrating a control map for an intake air temperature and an engine coolant temperature.
[FIG. 4] FIG. 4 is a flowchart illustrating contents of control related to an EGR system.
[FIG. 5] FIG. 5 is a flowchart illustrating contents of the control related to the EGR system.
[FIG. 6] FIG. 6 is a graph illustrating an EGR region.
[FIG. 7] FIG. 7 is a graph illustrating an example of a normal EGR rate.
[FIG. 8] FIG. 8 is a graph illustrating a low-temperature EGR region.
[FIG. 9] FIG. 9 is a graph illustrating an example of a low-temperature EGR rate.
[FIG. 10] FIG. 10 is a graph illustrating a normal EGR amount with respect to an engine speed and an engine load.
[FIG. 11] FIG. 11 is a graph illustrating a low-temperature EGR amount with respect to the engine speed and the engine load.
[FIG. 12] FIG. 12 is a graph illustrating a relationship between the engine load and each of the low-temperature EGR amount and the normal EGR amount.
[FIG. 13] FIG. 13 is a graph illustrating a relationship between the intake air temperature and an extremely low-temperature EGR rate.

### [Description of Embodiments]

### (Overall Configuration of Engine)

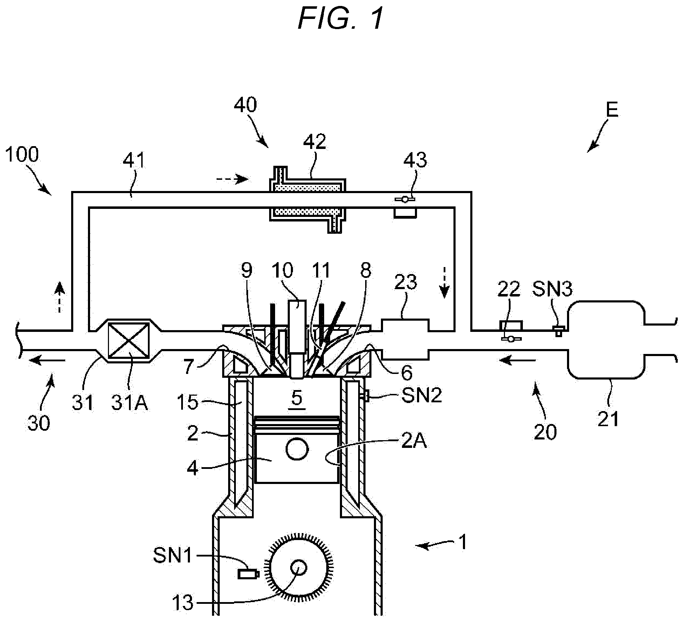

FIG. 1 is a schematic system view illustrating a preferred embodiment of an engine E, to which an exhaust gas recirculation system 100 according to the embodiment of the invention is applied. The engine E includes: an engine body 1 that is supplied with fuel to be driven; and an intake passage 20 and an exhaust passage 30, each of which is connected to the engine body 1. The intake passage 20 is a passage through which intake air, which is air to be introduced into the engine body 1, flows. The exhaust passage 30 is a passage through which exhaust gas discharged from the engine body 1 flows. For example, on a vehicle such as an automobile, the engine E is mounted as a travel power source therefor. In the present embodiment, the engine E may be a gasoline engine, and the engine body 1 may be driven by the fuel that contains gasoline as a main component.

The engine body 1 may be a multicylinder engine that has plural cylinders 2a (only one of them is illustrated in FIG. 1). In the present embodiment, the engine body 1 may be a four-cylinder inline engine, and may have the four cylinders 2a that are aligned in a direction orthogonal to a sheet of FIG. 1. For example, the engine body 1 includes: a cylinder block 2 that is formed with the plural cylinders 2a therein; a cylinder head 3 that is attached to an upper surface of the cylinder block 2 in a manner to close an upper end opening of each of the cylinders 2a; and plural pistons 4, each of which is accommodated in a slidably reciprocating manner in respective one of the cylinders 2a.

A combustion chamber 5 may be defined above the piston 4 in each of the cylinders 2a. The fuel may be supplied to the combustion chamber 5 by injection from an injector 10, which will be described below. Air-fuel mixture of the supplied fuel and the air is combusted in the combustion chamber 5, and then the piston 4 reciprocates e.g., in a vertical direction by receiving an expansion force by the combustion.

A crankshaft 13 as an output shaft of the engine body 1 may be provided at a lower part of the cylinder block 2 (under the piston 4). The crankshaft 13 may be coupled to the piston 4 via a connecting rod in each of the cylinders 2a. The crankshaft 13 rotates about a center axis thereof in response to reciprocating motion (vertical motion) of the piston 4.

A crank angle sensor SN1 may be attached to the cylinder block 2. The crank angle sensor SN1 detects a crank angle that is a rotation angle of the crankshaft 13 and an engine speed that is a rotational speed of the crankshaft 13.

A water jacket 15, through which coolant for cooling the engine body 1 flows, may be formed in the cylinder block 2 and the cylinder head 3. A coolant temperature sensor SN2 may be attached to the cylinder block 2. The engine coolant temperature sensor SN2 detects a temperature of the coolant that flows through the water jacket 15, that is, an engine coolant temperature.

In the cylinder head 3, an intake port 6 and an exhaust port 7, each of which communicates with the combustion chamber 5, may be formed for each cylinder 2a. The cylinder head 3 may be equipped with, for each cylinder 2a: an intake valve 8 that opens and/or closes an opening of the intake port 6 on the combustion chamber 5 side; and an exhaust valve 9 that opens and/or closes an opening of the exhaust port 7 on the combustion chamber 5 side.

For example, the cylinder head 3 is equipped with the injector 10 and an ignition plug 11 for each of the cylinders 2a. One injector 10 and one ignition plug 11 may be provided for each of the cylinders 2a.

The injector 10 is a fuel injection valve that injects the fuel into the combustion chamber 5. In the present embodiment, the injector 10 may be attached such that a tip thereof faces the combustion chamber 5 from the vicinity of a center of a ceiling surface of the combustion chamber 5.

The ignition plug 11 is an ignitor that ignites the air-fuel mixture of the fuel and the air produced in the combustion chamber 5. In the present embodiment, the ignition plug 11 may be disposed such that a tip portion thereof including a spark plug faces the inside of the combustion chamber 5 from the vicinity of the center of the ceiling surface of the combustion chamber 5.

The intake passage 20 is connected to the cylinder head 3 in a manner to communicate with the intake port 6 of each of the cylinders 2a. In the intake passage 20, an air cleaner 21, a throttle valve 22, and a surge tank 23 may be arranged in this order from an upstream side in a flow direction of the intake air.

For example, the air cleaner 21 is a filter that removes foreign matters in the intake air. The throttle valve 22 is a valve that opens and/or closes the intake passage 20. According to an opening amount of the throttle valve 22, an amount of the intake air that flows through the intake passage 20 and thus an amount of the air that is introduced into the engine body 1 are changed. The surge tank 23 is a tank and provides a space for evenly distributing the intake air to each of the cylinders 2a.

An intake air temperature sensor SN3 is disposed in the intake passage 20. The intake air temperature sensor SN3 may be disposed in a portion between the air cleaner 21 and the throttle valve 22 and is in the vicinity of the air cleaner 21. The intake air temperature sensor SN3 detects an intake air temperature that is the temperature of the intake air flowing through e.g., the vicinity of the air cleaner 21.

For example, the exhaust passage 30 is connected to the cylinder head 3 in a manner to communicate with the exhaust port 7 of each of the cylinders 2a. A catalytic converter 31 may be provided in the exhaust passage 30.

The catalytic converter 31 is a device that purifies the exhaust gas. The catalytic converter 31 may include a catalyst 31A and purifies the exhaust gas by a function of the catalyst 31A. For example, a three-way catalyst is used as the catalyst 31A.

The engine E is provided with an EGR system 40. The EGR system 40 includes an EGR passage 41 as well as an EGR valve 43 that are provided in the EGR passage 41. The EGR system 40 may also include an EGR cooler 42.

The EGR passage 41 is a passage that connects the exhaust passage 30 and the intake passage 20 and recirculates EGR gas as a part of the exhaust gas to the intake passage 20. The EGR passage 41 may connect a portion of the exhaust passage 30 on a downstream side of the catalytic converter 31 in a flow direction of the exhaust gas to a portion of the intake passage 20 between the throttle valve 22 and the surge tank 23.

The EGR cooler 42 is a device that cools the EGR gas flowing through the EGR passage 41 by heat exchange. The coolant that flows through the water jacket 15 may be introduced into the EGR cooler 42. The EGR gas may be cooled by the heat exchange with this coolant in the EGR cooler 42.

The EGR valve 43 is provided in the EGR passage 41 e.g., on a downstream side (a near side of the intake passage 20) of the EGR cooler 42 in a flow direction of the EGR gas. The EGR valve 43 opens and/or closes the EGR passage 41. An EGR amount as an amount of the EGR gas to be recirculated to the intake passage 20 through the EGR passage 41 is changed or adjusted according to an opening amount of the EGR valve 43.

### (Control System)

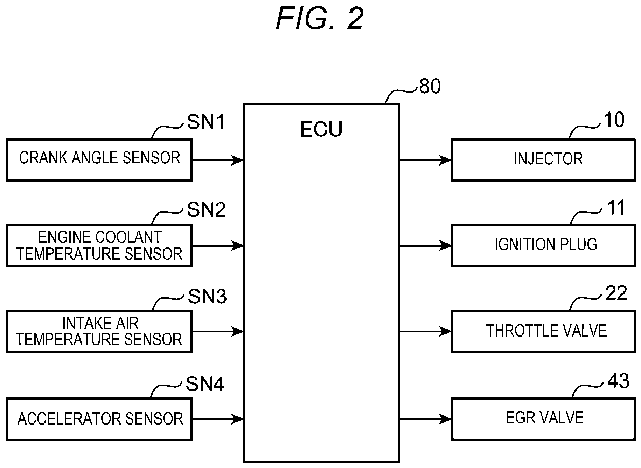

FIG. 2 is a functional block diagram illustrating a control system of the engine E. An ECU 80 illustrated in this drawing may be a device for integrally controlling the engine E. For example, The ECU 80 is configured by a microcomputer including a processor (CPU) that executes various arithmetic processing, memory such as ROM and RAM, and various input/output buses. The ECU 80 corresponds to the "controller" in the present disclosure.

The ECU 80 may be electrically connected to the crank angle sensor SN1, the engine coolant temperature sensor SN2, and the intake air temperature sensor SN3. An accelerator sensor SN4 may be mounted on the vehicle, the accelerator sensor SN4 detecting an accelerator operation amount that is an operation amount of an accelerator pedal provided in the vehicle.

The ECU 80 may also be electrically connected to the accelerator sensor SN4. Information detected by each of the sensors SN1 to SN4, that is, information on the crank angle, the engine speed, the engine coolant temperature, the intake air temperature, and the accelerator operation amount are input or sequentially input to the ECU 80.

For example, the ECU 80 controls each section of the engine E while performing various determinations, calculations, and the like on the basis of the input information from each of the sensors SN1 to SN4, and the like. The ECU 80 may be electrically connected to the injector 10, the ignition plug 11, the throttle valve 22, and the EGR valve 43, and outputs a control signal to each of these devices on the basis of results of the above calculations and the like.

### (Control of EGR System)

A description will be made on control of the EGR system 40.

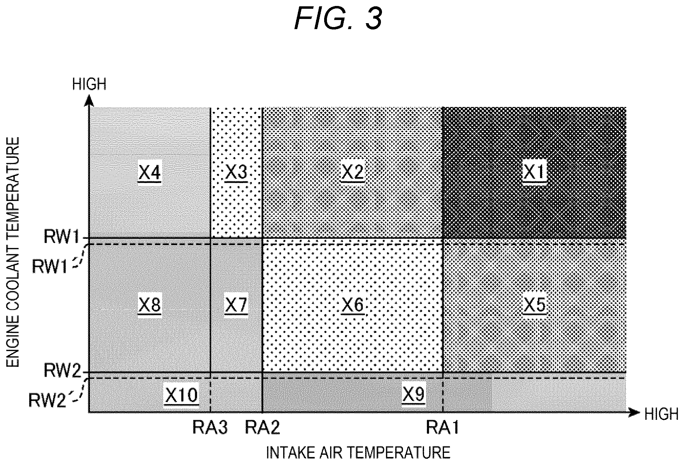

FIG. 3 is a view illustrating a control map of the intake air temperature and/or the engine coolant temperature. Hereinafter, in a control area related to the intake air temperature and the engine coolant temperature, an area where the intake air temperature is higher than a predetermined first intake air temperature RA1 in a high coolant temperature area where the engine coolant temperature is higher than a predetermined first coolant temperature RW1 will be referred to as a first area X1.

In the high coolant temperature area, an area where the intake air temperature is equal to or lower than the first intake air temperature RA1 and is higher than a predetermined second intake air temperature RA2 will be referred to as a second area X2. In the high coolant temperature area, an area where the intake air temperature is equal to or lower than the second intake air temperature RA2 and is higher than a predetermined third intake air temperature RA3 will be referred to as a third area X3. In the high coolant temperature area, an area where the intake air temperature is equal to or lower than the third intake air temperature RA3 will be referred to as a fourth area X4.

The first intake air temperature RA1 corresponds to the "first set temperature" in the invention. The second intake air temperature RA2 corresponds to the "second set temperature". The third intake air temperature RA3 corresponds to the "third set temperature".

The first coolant temperature RW1 may be set and stored in the ECU 80 in advance. For example, the first coolant temperature RW1 is set to 60°C or about 60°C.

The second intake air temperature RA2 is a temperature that is higher than the third intake air temperature RA3. The first intake air temperature RA1 is a temperature that is higher than the second intake air temperature RA2. The third intake air temperature RA3, the second intake air temperature RA2, and the first intake air temperature RA1 may be set and stored in the ECU 80 in advance. For example, the third intake air temperature RA3 is set to -15°C or about -15°C, the second intake air temperature RA2 is set to -10°C or about -10°C, and the first intake air temperature RA1 is set to -3°C or about -3°C.

In a low coolant temperature area where the engine coolant temperature is equal to or lower than the first coolant temperature RW1 and is higher than a predetermined second coolant temperature RW2, an area where the intake air temperature is higher than the first intake air temperature RA1 will be referred to as a fifth area X5. In the low coolant temperature area, an area where the intake air temperature is equal to or lower than the first intake air temperature RA1 and is higher than the second intake air temperature RA2 will be referred to as a sixth area X6.

In the low coolant temperature area, an area where the intake air temperature is equal to or lower than the second intake air temperature RA2 and is higher than the third intake air temperature RA3 will be referred to as a seventh area X7. In the low coolant temperature area, an area where the intake air temperature is equal to or lower than the third intake air temperature RA3 will be referred to as an eighth area X8.

In an extremely low coolant temperature area where the engine coolant temperature is equal to or lower than the second coolant temperature RW2, an area where the intake air temperature is higher than the second intake air temperature RA2 will be referred to as a ninth area X9. In the extremely low coolant temperature area, an area where the intake air temperature is equal to or lower than the second intake air temperature RA2 will be referred to as a tenth area X10. The second coolant temperature RW2 may be set and stored in the ECU 80 in advance. For example, the second coolant temperature RW2 is set to 30°C or about 30°C.

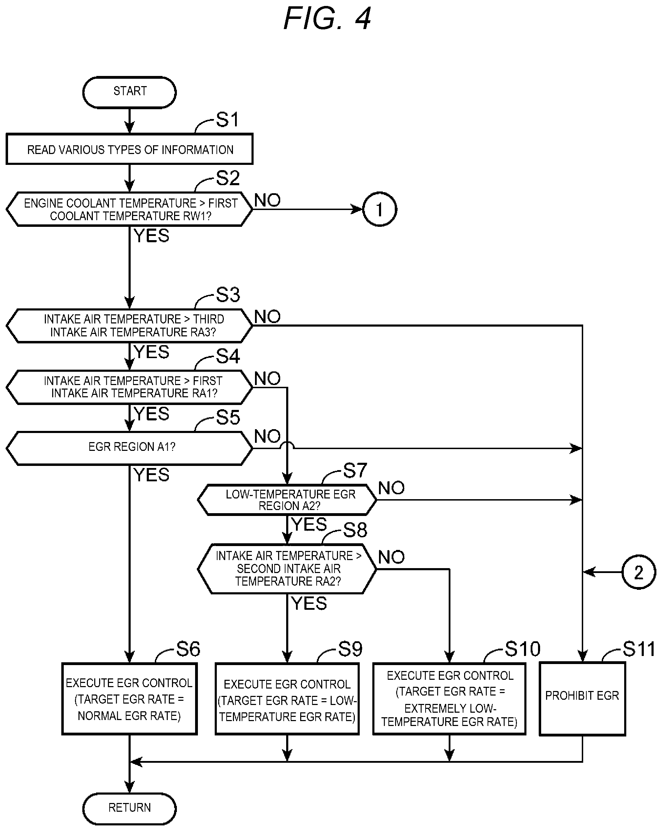

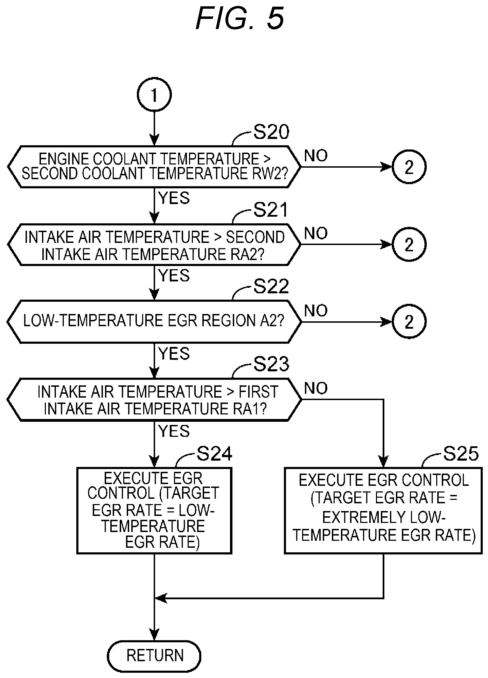

FIG. 4 and FIG. 5 are flowcharts illustrating contents of control related to the EGR system 40, the control being executed by the ECU 80. Steps S1 to S25 illustrated in FIG. 4 and FIG. 5 may be repeatedly executed in every predetermined period in a state where the engine body 1 is started and/or operated.

First, the ECU 80 may read various types of the information that are detected by the sensors SN1 to SN4 and the like (step S1). In step S1, for example, the ECU 80 at least reads the engine speed, the engine coolant temperature, an intake air flow rate, the intake air temperature, and the accelerator operation amount.

Next, the ECU 80 may determine whether the engine coolant temperature that has been read in step S1 is higher than the first coolant temperature RW1 (step S2). If it is determined NO in step S2 and thus the engine coolant temperature is equal to or lower than the first coolant temperature RW1, the ECU 80 may proceed to step S20 illustrated in FIG. 5.

On the other hand, if it is determined YES in step S2 and thus the engine coolant temperature is higher than the first coolant temperature RW1, the ECU 80 may determine whether the intake air temperature that has been read e.g**.,** in step S1 is higher than the third intake air temperature RA3 (step S3).

If it is determined NO in step S3 and thus the intake air temperature is equal to or lower than the third intake air temperature RA3, that is, if the intake air temperature and the engine coolant temperature are temperatures in the fourth area X4, the ECU 80 may prohibit the EGR control (step S11). The EGR control is control for recirculating the EGR gas to the intake passage 20 by opening the EGR valve 43. In step S11, the ECU 80 may prohibit opening of the EGR valve 43 and may close the EGR valve 43. For example, when the EGR valve 43 is already closed, closing of the valve is maintained. After step S11, the ECU 80 returns to step S1.

Just as described, when the intake air temperature and the engine coolant temperature are the temperatures in the fourth area X4, the EGR control may be prohibited.

Returning to Step S3, if it is determined YES in Step S3 and thus the intake air temperature is higher than the third intake air temperature RA 3, the ECU 80 may determine whether the intake air temperature is higher than the first intake air temperature RA 1(Step S4).

If it is determined YES in step S4 and thus the intake air temperature is higher than the first intake air temperature RA1, that is, if the engine coolant temperature and the intake air temperature are temperatures in the first area X1, for example, the ECU 80 next determines whether the engine E is operated in an EGR region A1 (step S5).

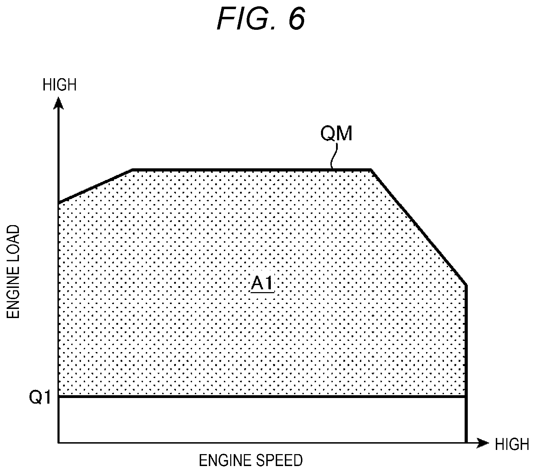

The EGR region A1 may be set for the engine speed and/or an engine load and may be stored in the ECU 80 in advance. FIG. 6 is a graph illustrating an operating region of the engine E and the EGR region A1.

The EGR region A1 may be set as a region where the engine load is equal to or higher than a predetermined first load Q1 in a region where the engine E can be operated, and may include a region on a high load side near a maximum load QM. For example, the first load Q1 is set to a relatively low value, and the EGR region A1 occupies most of the operating region of the engine E.

In step S5, the ECU 80 may compare the engine load with the first load Q1, and may determine that the engine E is operated in the EGR region A1 when the engine load is equal to or higher than the first load Q1. Here, the ECU 80 may separately calculate the engine load on the basis of the accelerator operation amount, the engine speed, and the like that have been read in step S1.

If it is determined NO in step S5 and thus the engine E is not operated in the EGR region A1, the ECU 80 may proceed to step S11, prohibit the EGR control, and closes the EGR valve 43. After step S11, the ECU 80 may returns to step S1.

Just as described, when the engine E is operated in a region outside the EGR region A1 in a state where the intake air temperature and the engine coolant temperature are the temperatures in the first area X1, the EGR control is prohibited.

On the other hand, if it is determined YES in step S5 and thus the engine E is operated in the EGR region A1, the ECU 80 may proceed to step S6. In step S6, the ECU 80 may execute the EGR control, open the EGR valve 43, and set a target EGR rate, which is a target value of an EGR rate, to a normal EGR rate.

Particularly, the ECU 80 adjusts the opening amount of the EGR valve 43 to realize the target EGR rate. The EGR rate is a weight ratio of the EGR gas to the whole gas in the combustion chamber 5. The normal EGR rate may be set and stored in the ECU 80 in advance.

In the present embodiment, the normal EGR rate may be stored, in the ECU 80, in the form of a map related to the engine speed and/or the engine load. In step S6, the ECU 80 may extract, from this map, a value corresponding to the engine speed and the engine load that have been read in step S1, and set this as the target EGR rate.

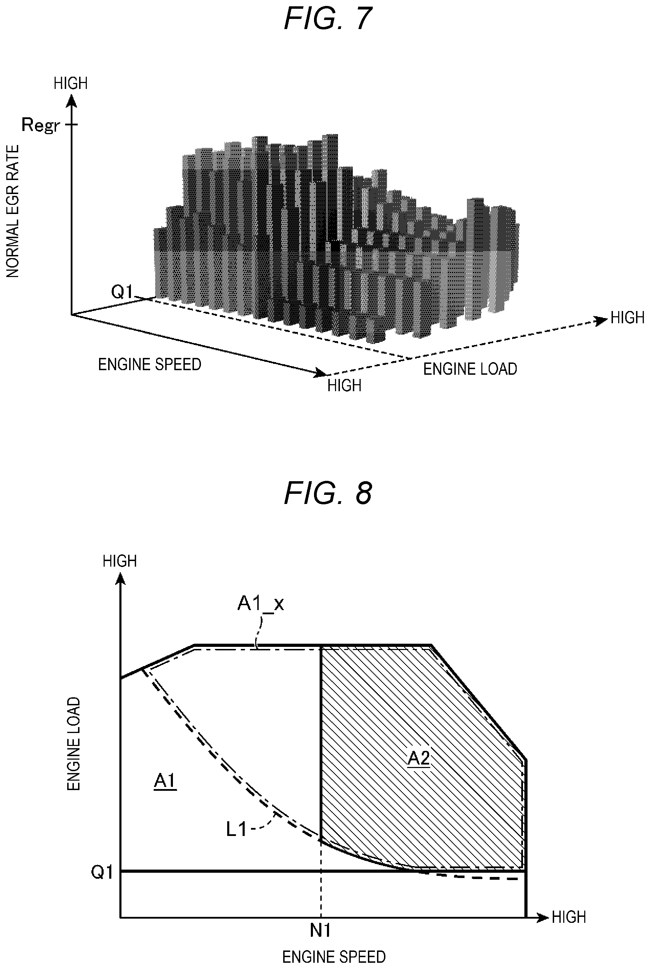

For example, as illustrated in FIG. 7, as a whole, the normal EGR rate is set to be a higher value as the engine speed is reduced. Here, the normal EGR rate may be set to a value that is higher than 0.

Just as described, when the engine E is operated in the EGR region A1 in the state where the intake air temperature and the engine coolant temperature are the temperatures in the first area X1, the EGR valve 43 is controlled such that the EGR control is executed and the EGR rate becomes the normal EGR rate.

Returning to step S4, if it is determined NO in step S4 and thus the intake air temperature is equal to or lower than the first intake air temperature RA1, that is, if the engine coolant temperature and the intake air temperature are temperatures in the second area X2 or the third area X3, the ECU 80 may determine whether the engine E is operated in a low-temperature EGR region A2 (step S7).

The low-temperature EGR region A2 may be set for the engine speed and/or the engine load and is stored in the ECU 80 in advance. FIG. 8 is a graph illustrating the low-temperature EGR region A2. The low-temperature EGR region A2 may be set in the EGR region A1. In other words, the low-temperature EGR region A2 may be set to be partially overlap the EGR region A1.

For example, in the EGR region A1, the low-temperature EGR region A2 is set to satisfy a requirement that a lower limit value of the engine speed in the low-temperature EGR region A2 is higher than a lower limit value of the engine speed in the EGR region A1. Particularly, the low-temperature EGR region A2 may be set on a high side (or higher side) of the engine speed and/or the engine load from a line L1 illustrated in FIG. 8.

The line L1 may be a line on which the intake air flow rate, in particular, weight of the intake air that flows into the combustion chamber 5 per unit time becomes a predetermined set flow rate. The weight of the intake air that flows into the combustion chamber 5 per unit time is increased as the engine speed is increased. Particularly, in order to achieve this, the weight of the intake air that is introduced into the combustion chamber 5 is increased as the engine load is increased. Thus, the intake air flow rate is equal to or higher than the set flow rate at an operation point on the line L1 and an operation point in a region where the engine speed and the engine load are higher than those on the line L1.

As illustrated in FIG. 8, in the present embodiment, the low-temperature EGR region A2 may be set as a region where the engine speed is higher than a predetermined low-temperature EGR start speed N1 in a region A1_x that is included in the EGR region A1 and is located on the high side (or higher side) of the engine speed and/or the engine load from the line L1. The low-temperature EGR start speed N1 may correspond to the lower limit value in the low-temperature EGR region A2.

For example, ss illustrated in FIG. 8, the low-temperature EGR start speed N1 may be a speed that is higher than a lower limit value N0 of the engine speed in the EGR region A1. In the present embodiment, a lower limit value of the engine load in the low-temperature EGR region A2 may be set to the same first load Q1 as a lower limit value of the engine load in the EGR region A1. For example, the set flow rate is set to about 30 g/s, and the low-temperature EGR start speed N1 is set to about 3000 rpm.

Returning to step S7 in FIG. 4, if it is determined NO in step S7 and thus the engine E is operated outside the low-temperature EGR region A2, the ECU 80 proceeds to step S11, prohibits the EGR control, and closes the EGR valve 43. After step S11, the ECU 80 may return to step S1.

Just as described, when the intake air temperature and the engine coolant temperature are the temperatures in the second area X2 or the third area X3, and the engine E is operated outside the low-temperature EGR region A2, the EGR control is prohibited. Particularly, in the case where the engine coolant temperature is higher than the first coolant temperature RW1 while the intake air temperature is equal or lower than the first intake air temperature RA1, the EGR control is prohibited even when the engine E is operated in the EGR region A1 under a condition that the engine speed and the engine load are lower than those on the line L1 and the intake air flow rate is lower than the set flow rate or under a condition that the engine speed is equal to or lower than the low-temperature EGR start speed N1.

On the other hand, if it is determined YES in step S7 and thus the engine E is operated in the low-temperature EGR region A2, the ECU 80 next determines whether the intake air temperature is higher than the second intake air temperature RA2 (step S8).

If it is determined YES in step S8 and thus the intake air temperature is higher than the second intake air temperature RA2, that is, if the engine E is operated in the low-temperature EGR region A2, and the intake air temperature and the engine coolant temperature are the temperatures in the second area X2, the ECU 80 may proceed to step S9. In step S9, the ECU 80 may execute the EGR control, open the EGR valve 43, and set the target EGR rate, which is the target value of the EGR rate, to a low-temperature EGR rate.

Particularly, the ECU 80 adjusts the opening amount of the EGR valve 43 to realize the target EGR rate. The low-temperature EGR rate may be set and stored in the ECU 80 in advance. In the present embodiment, the low-temperature EGR rate may be stored, in the ECU 80, in the form of a map related to the engine speed and the engine load.

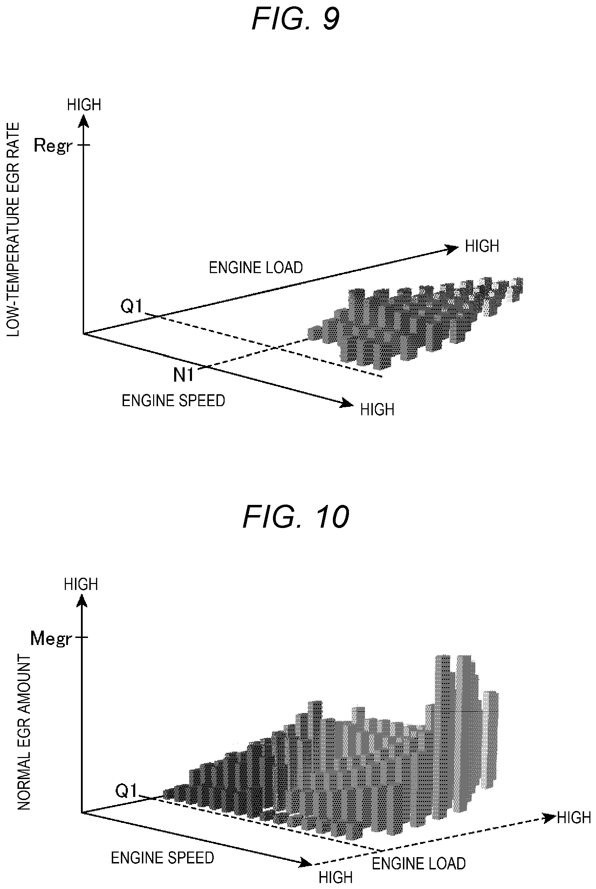

In step S9, the ECU 80 may extract, from this map, a value corresponding to the engine speed and the engine load that have been read in step S1, and set this as the target EGR rate. For example, the low-temperature EGR rate is set as illustrated in FIG. 9. "Regr" in the graphs of FIG. 7 and FIG. 9 have the same value, and as being apparent from a comparison of these graphs, the low-temperature EGR rate is set to a value that is generally lower than the normal EGR rate for each of the engine speed and the engine load.

For example, the low-temperature EGR rate is set such that the EGR amount at the time of realizing the low-temperature EGR rate is equal to or smaller than a predetermined low-temperature upper limit EGR amount. Hereinafter, the EGR amount at the time when step S6 is appropriately executed and the normal EGR rate is realized will be referred to as a normal EGR amount. Particularly, the EGR amount at the time when step S9 is executed and the low-temperature EGR rate is realized will be referred to as a low-temperature EGR amount.

The low-temperature upper limit EGR amount may be a smaller value than a maximum value of the normal EGR amount, and the low-temperature EGR amount is smaller than the maximum value of the normal EGR amount. Particularly, the low-temperature EGR rate is set such that the low-temperature EGR amount is equal to or smaller than the normal EGR amount when the low-temperature EGR amount and the normal EGR amount are compared at the operation point at which each of the engine speed and the engine load is the same.

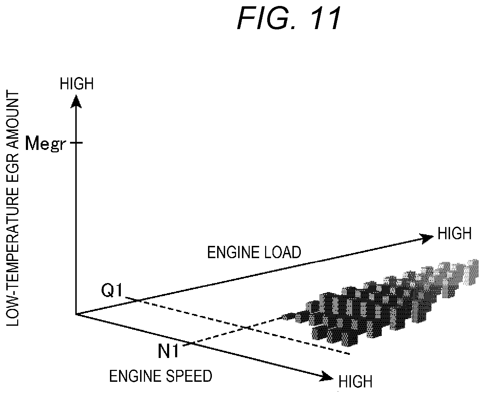

FIG. 10 is a graph illustrating the normal EGR amount with respect to the engine speed and/or the engine load. FIG. 11 is a graph illustrating the low-temperature EGR amount with respect to the engine speed and/or the engine load. "Megr" in the graphs of FIG. 10 and FIG. 11 is the same value.

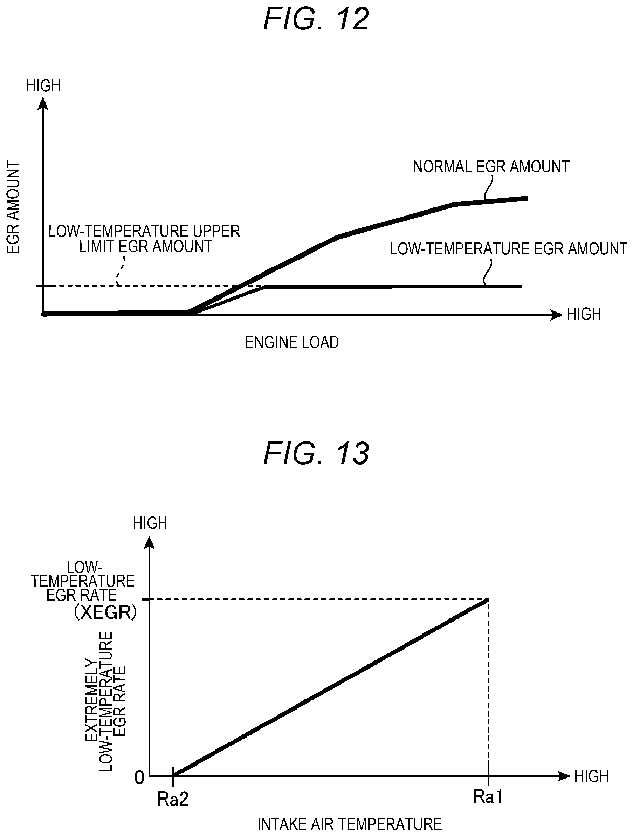

FIG. 12 is a graph illustrating a relationship between the engine load and each of the low-temperature EGR amount and the normal EGR amount at a predetermined engine speed included in the low-temperature EGR region A2, that is, a predetermined engine speed that is higher than the low-temperature EGR start speed N1. As it is understood from the comparison between FIG. 10 and FIG. 11, and FIG. 12, the low-temperature EGR amount is equal to or smaller than the normal EGR amount.

This relationship may be established at any operation point (at any engine speed and any engine load). That is, the low-temperature EGR amount may be equal to or smaller than the normal EGR amount at any operation point (at any engine speed and any engine load).

Particularly, as it is understood from the comparison between FIG. 10 and FIG. 11, and FIG. 12, a maximum value of the low-temperature EGR amount is smaller than the maximum value of the normal EGR amount. As illustrated in FIG. 11 and FIG. 12, the low-temperature EGR amount may be an upper limit value, that is, the low-temperature upper limit EGR amount except for a part of the region where the engine speed and the engine load are low in the low-temperature EGR region A2. In other words, the low-temperature EGR rate is set such that the EGR amount becomes the low-temperature upper limit EGR amount in most region of the low-temperature EGR region A2.

Just as described, when the intake air temperature and the engine coolant temperature are the temperatures in the second area X2, and the engine E is operated in the low-temperature EGR region A2, the EGR valve 43 may be controlled such that the EGR control is executed and the EGR rate becomes the low-temperature EGR rate. Particularly, the EGR amount at this time is set to be equal to or smaller than the low-temperature upper limit EGR amount, and is also set to be equal to or smaller than the normal EGR amount at the same operation point, that is, to be equal to or smaller than the EGR amount at the time when the intake air temperature and the engine coolant temperature are the temperatures in the first area X1 and the engine speed and the engine load are the same. Further particularly, the EGR amount at this time is set to be a smaller amount than the maximum value of the normal EGR amount, that is, a smaller amount than the maximum value of the EGR amount at the time when the intake air temperature and the engine coolant temperature are the temperatures in the first area X1.

Returning to step S8, if it is determined NO in step S8 and thus the intake air temperature is equal to or lower than the second intake air temperature RA2, that is, if the engine E is operated in the low-temperature EGR region A2, and the intake air temperature and the engine coolant temperature are the temperatures in the third area X3, the ECU 80 may proceed to step S10. In step S10, the ECU 80 may execute the EGR control, opens the EGR valve 43, sets the target EGR rate to the extremely low-temperature EGR rate, and adjusts the opening amount of the EGR valve 43 to realize this.

The extremely low-temperature EGR rate at the time when the intake air temperature is the third intake air temperature RA3 may be set to 0 (zero) or about 0. The extremely low-temperature EGR rate at the time when the intake air temperature is the second intake air temperature RA2 may be set to be the same value as the low-temperature EGR rate.

The extremely low-temperature EGR rate at the time when the intake air temperature is a temperature between the third intake air temperature RA3 and the second intake air temperature RA2 may be set to a value that is obtained by linearly interpolating, with respect to the intake air temperature, 0 (zero) and the value at the time when the intake air temperature is the second intake air temperature RA2. In this way, as in FIG. 13 illustrating the relationship between the intake air temperature and the extremely low-temperature EGR rate, the extremely low-temperature EGR rate may be set to a higher value as the intake air temperature is increased.

For example, based on the engine speed and the engine load read in step S1, the ECU 80 first sets the value of the low-temperature EGR rate, which corresponds to these, as an interpolation reference value. Next, the ECU 80 sets the interpolation reference value as XEGR and the intake air temperature as TA, and calculates an extremely low-temperature EGR rate XXEGR by XXEGR = (TA - RA1)/(RA2 - RA1) × XEGR.

Just as described, when the intake air temperature and the engine coolant temperature are the temperatures in the third area X3, and the engine E is operated in the low-temperature EGR region A2, the EGR control is executed. Here, the extremely low-temperature EGR rate that is calculated as described above may be lower than the low-temperature EGR rate and the normal EGR rate at the same operation point. As a result, when the intake air temperature and the engine coolant temperature are the temperatures in the third area X3, and the engine E is operated in the low-temperature EGR region A2, the EGR amount becomes equal to or smaller than the low-temperature EGR amount and thus equal to or smaller than the low-temperature upper limit EGR amount, and becomes equal to or smaller than the normal EGR amount at the same operation point.

Returning to step S2, if it is determined NO in step S2 and thus the engine coolant temperature is equal to or lower than the first coolant temperature RW1, the ECU 80 may proceed to step S20 illustrated in FIG. 5. In step S20, the ECU 80 may determine whether the engine coolant temperature that has been read in step S1 is higher than the second coolant temperature RW2.

If it is determined NO in step S20 and thus the engine coolant temperature is equal to or lower than the second coolant temperature RW2, that is, if the intake air temperature and the engine coolant temperature are the temperatures in the ninth area X9 or the tenth area X10, the ECU 80 may proceed to step S11, prohibit the EGR control, and close the EGR valve 43. After step S11, the ECU 80 returns to step S1.

Just as described, when the intake air temperature and the engine coolant temperature are the temperatures in the ninth area X9 or the tenth area X10, the EGR control may be prohibited.

On the other hand, if it is determined YES in step S20 and thus the engine coolant temperature is higher than the second coolant temperature RW2, the ECU 80 may determine whether the intake air temperature that has been read in step S1 is higher than the second intake air temperature RA2 (step S21).

If it is determined NO in step S21 and thus the intake air temperature is equal to or lower than the second intake air temperature RA2, that is, if the intake air temperature and the engine coolant temperature are the temperatures in the seventh area X7 or the eighth area X8, the ECU 80 may proceed to step S11, prohibit the EGR control, and close the EGR valve 43. After step S11, the ECU 80 returns to step S1.

Just as described, when the intake air temperature and the engine coolant temperature are the temperatures in the seventh area X7 or the eighth area X8, the EGR control may be prohibited.

On the other hand, if it is determined YES in step S21 and thus the intake air temperature is higher than the second intake air temperature RA2, that is, if the engine coolant temperature and the intake air temperature are the temperatures in the fifth area X5 or the sixth area X6, similar to step S7, the ECU 80 may determine whether the engine E is operated in the low-temperature EGR region A2 (step S22). The determination in step S22 is the same as that in step S7, and the description thereon will not be made.

If it is determined NO in step S22 and thus the engine E is operated outside the low-temperature EGR region A2, the ECU 80 proceeds to step S11, prohibits the EGR control, and closes the EGR valve 43. After step S11, the ECU 80 may return to step S1.

Just as described, when the intake air temperature and the engine coolant temperature are the temperatures in the fifth area X5 or the sixth area X6, and the engine E is operated outside the low-temperature EGR region A2, the EGR control may be prohibited.

On the other hand, if it is determined YES in step S22 and thus the engine E is operated in the low-temperature EGR region A2, the ECU 80 next determines whether the intake air temperature is higher than the first intake air temperature RA1 (step S23).

If it is determined YES in step S23 and thus the intake air temperature is higher than the first intake air temperature RA1, that is, if the engine E is operated in the low-temperature EGR region A2, and the intake air temperature and the engine coolant temperature are the temperatures in the fifth area X5, the ECU 80 may proceed to step S24. In step S24, the ECU 80 may execute the same control as that in step S9. That is, in step S24, the ECU 80 may execute the EGR control, open the EGR valve 43, and set the target EGR rate to the low-temperature EGR rate. Particularly, the ECU 80 adjusts the opening amount of the EGR valve 43 to realize the set target EGR rate.

Just as described, when the intake air temperature and the engine coolant temperature are the temperatures in the fifth area X5, and the engine E is operated in the low-temperature EGR region A2, the EGR valve 43 may be controlled such that the EGR control is executed and the EGR rate becomes the low-temperature EGR rate. Particularly, similar to the time of execution of step S9, the EGR amount at this time is set to be equal to or smaller than the low-temperature upper limit EGR amount, and is also set to be equal to or smaller than the normal EGR amount at the same operation point.

Returning to step S23, if it is determined NO in step S23 and thus the intake air temperature is equal to or lower than the first intake air temperature RA1, that is, if the engine E is operated in the low-temperature EGR region A2, and the intake air temperature and the engine coolant temperature are the temperatures in the sixth area X6, the ECU 80 may proceed to step S25. In step S25, the ECU 80 may execute the EGR control and open the EGR valve 43. Particularly, the ECU 80 sets the target EGR rate to an extremely low coolant temperature EGR rate, and adjusts the opening amount of the EGR valve 43 to realize this.

The extremely low coolant temperature EGR rate at the time when the intake air temperature is the second intake air temperature RA2 may be set to 0 (zero) or about 0. The extremely low-temperature EGR rate at the time when the intake air temperature is the first intake air temperature RA1 may be set to the same value as the low-temperature EGR rate.

For example, the extremely low-temperature EGR rate at the time when the intake air temperature is a temperature between the second intake air temperature RA2 and the first intake air temperature RA1 is set to a value that is obtained by linearly interpolating, with respect to the intake air temperature, 0 (zero) and the value at the time when the intake air temperature is the first intake air temperature RA1. In this way, similar to the extremely low-temperature EGR rate, the extremely low coolant temperature EGR rate is set to a higher value as the intake air temperature is increased.

Just as described, when the intake air temperature and the engine coolant temperature are the temperatures in the sixth area X6, and the engine E is operated in the low-temperature EGR region A2, the EGR control may be executed. Here, the extremely low coolant temperature EGR rate that is calculated as described above may be lower than the low-temperature EGR rate and the normal EGR rate at the same operation point. As a result, when the intake air temperature and the engine coolant temperature are the temperatures in the sixth area X6, and the engine E is operated in the low-temperature EGR region A2, the EGR amount becomes equal to or smaller than the low-temperature EGR amount and thus equal to or smaller than the low-temperature upper limit EGR amount, and becomes equal to or smaller than the normal EGR amount at the same operation point.

Here, although not illustrated in a flowchart, in the present embodiment, the target EGR rate may be calculated by the linear interpolation with respect to the engine coolant temperature near a boundary between the sixth area X6 and the second area X2, near a boundary between the seventh area X7 and the third area X3, and near a boundary among the ninth area X9, the fifth area X5, and the sixth area X6. Then, the opening amount of the EGR valve 43 is adjusted to realize this target EGR rate.

For example, the target EGR rate is set as follows in the case where the intake air temperature and the engine coolant temperature are positioned near the boundary between the sixth area X6 and the second area X2, the intake air temperature is higher than the second intake air temperature RA2 and equal to or lower than the first intake air temperature RA1, and the engine coolant temperature is lower than the first coolant temperature RW1 and higher than an interpolation first coolant temperature RW1'. First, the ECU 80 may set the low-temperature EGR rate on the basis of the engine speed and the engine load.

Particularly, the ECU 80 sets the extremely low coolant temperature EGR rate on the basis of the engine speed, the engine load, and the intake air temperature. Then, the ECU 80 may set the set low-temperature EGR rate as the target EGR rate at the time when the engine coolant temperature is the first coolant temperature RW1, set the set extremely low coolant temperature EGR rate as the target EGR rate at the time when the engine coolant temperature is the interpolation first coolant temperature RW1', calculate a value that is obtained by linearly interpolating these two values with respect to the engine coolant temperature, and set the calculated value as the target EGR rate at the time when the engine coolant temperature is a temperature between the interpolation first coolant temperature RW1' and the first coolant temperature RW1.

Here, the interpolation first coolant temperature RW1' may be set in advance as a value whose difference from the first coolant temperature RW1 is extremely small, and may be stored in the ECU 80. For example, the interpolation first coolant temperature RW1' is set to a value that is about 1°C lower than the first coolant temperature RW1.

The ECU 80 may set the target EGR rate as follows in the case where the intake air temperature and the engine coolant temperature are positioned in a boundary area between the seventh area X7 and the third area X3, and the intake air temperature and the engine coolant temperature may be temperatures in an area where the intake air temperature is higher than the third intake air temperature RA3 and equal to or lower than the second intake air temperature RA2 and the engine coolant temperature may be lower than the first coolant temperature RW1 and higher than the interpolation first coolant temperature RW1'. That is, the ECU 80 may set the target EGR rate at the time when the engine coolant temperature is the first coolant temperature RW1 to the extremely low coolant temperature EGR rate, set the target EGR rate at the time when the engine coolant temperature is the interpolation first coolant temperature RW1' to 0 (zero), and set a value that is obtained by linearly interpolating these two values with respect to the engine coolant temperature as the target EGR rate.

Particularly, the ECU 80 sets the target EGR rate as follows in the case where the intake air temperature and the engine coolant temperature are positioned in a boundary area between the ninth area X9 and the sixth area X6, and the intake air temperature and the engine coolant temperature are temperatures in an area where the intake air temperature is higher than the second intake air temperature RA2 and equal to or lower than the first intake air temperature RA1 and the engine coolant temperature is lower than the second coolant temperature RW2 and higher than an interpolation second coolant temperature RW2'. That is, the ECU 80 may set the target EGR rate at the time when the engine coolant temperature is the second coolant temperature RW2 to the extremely low coolant temperature EGR rate, set the target EGR rate at the time when the engine coolant temperature is the interpolation second coolant temperature RW2' to 0 (zero), and set a value that is obtained by linearly interpolating these two values with respect to the engine coolant temperature as the target EGR rate.

Particularly, the ECU 80 sets the target EGR rate as follows in the case where the intake air temperature and the engine coolant temperature are positioned in a boundary area between the ninth area X9 and the fifth area X5, and the intake air temperature and the engine coolant temperature are temperatures in an area where the intake air temperature is higher than the first intake air temperature RA1 and the engine coolant temperature is lower than the second coolant temperature RW2 and higher than the interpolation second coolant temperature RW2'. That is, the ECU 80 may set the target EGR rate at the time when the engine coolant temperature is the second coolant temperature RW2 to the low-temperature EGR rate, set the target EGR rate at the time when the engine coolant temperature is the interpolation second coolant temperature RW2' to 0 (zero), and set a value that is obtained by linearly interpolating these two values with respect to the engine coolant temperature as the target EGR rate.

Here, the interpolation first coolant temperature RW1' may be set in advance as a value whose difference from the second coolant temperature RW2 is extremely small, and may be stored in the ECU 80. For example, the interpolation second coolant temperature RW2' is set to a value that is about 1°C lower than the second coolant temperature RW2.

### (Operation, Etc.)

For example, in the above embodiment, the EGR region A1, where the EGR control is executed when the intake air temperature and the engine coolant temperature are the temperatures in the first area X1, is set over a relatively wide range. Particularly, also when the intake air temperature and the engine coolant temperature are the temperatures in the second area X2, the third area X3, the fifth area X5, and the sixth area X6, and when the engine E is operated in the low-temperature EGR region A2, the EGR control is executed. Accordingly, it is possible to reduce the combustion temperature by introducing the EGR gas as the inert gas into the combustion chamber 5 at many opportunities and thus to improve engine performance.

Further particularly, in the above embodiment, each of the EGR region A1 and the low-temperature EGR region A2 includes the region where the engine speed and the engine load are high, and the EGR control is executed even when the engine speed and the engine load are high. Accordingly, it is possible to prevent an excessive temperature increase of the exhaust gas while securing the engine output. For example, when the engine speed and the engine load are high, the combustion temperature tends to become high. When the combustion temperature becomes high, the temperature of the exhaust gas and thus the temperature of the catalyst 31A, which is provided in the exhaust passage 30, becomes high. As a result, deterioration of the catalyst 31A is possibly accelerated. To handle the above, it is necessary to reduce the combustion temperature especially when the engine speed and the engine load are high.

The method for reducing the combustion temperature may include a method for increasing the amount of the fuel that is supplied to the combustion chamber 5 and thereby reducing the temperature inside the combustion chamber 5 and thus the combustion temperature by latent heat of vaporization of the fuel and a method for slowing the combustion by delaying ignition timing to ignite the air-fuel mixture in the combustion chamber 5. However, these methods possibly increase unburned fuel contained in the exhaust gas and possibly reduce the engine output. On the contrary, in the above embodiment, the EGR gas is introduced into the combustion chamber 5 even when the engine speed and the engine load are high. Thus, the combustion temperature can be reduced. As a result, it is possible to prevent the excessive temperature increase of the exhaust gas without the excessive fuel supply or the delayed ignition timing, that is, while securing the engine output and improving exhaust performance.

However, when the intake air temperature is low, moisture in the EGR gas is possibly condensed in the intake passage 20, and condensed water is possibly produced in the intake passage 20. In addition, when the engine coolant temperature is low, the EGR gas is excessively cooled by the low-temperature coolant in the EGR cooler 42. As a result, condensed water is possibly produced in the EGR passage 41 and thus the intake passage 20. When an amount of condensed water is small, an influence of this on the combustion state in the combustion chamber 5 is small. However, when a large amount of condensed water flows into the combustion chamber 5 at once, there is a possibility that the air-fuel mixture is not burned appropriately in the combustion chamber 5 and causes misfire. Furthermore, when the large amount of condensed water is accumulated and freezes around the throttle valve 22, driving of the throttle valve 22 is affected.

On the other hand, in the above embodiment, in the case where the intake air temperature and the engine coolant temperature are the temperatures in the second area X2, the third area X3, the fifth area X5, and the sixth area X6, that is, in the case where the intake air temperature or the engine coolant temperature is low, the EGR control is executed only when the engine E is operated in the low-temperature EGR region A2. Then, this low-temperature EGR region A2 is set as the region on the side where the engine speed and the engine load are high from the line L1 on which the intake air flow rate becomes the set flow rate, and as the region where the intake air flow rate is equal to or higher than the set flow rate. That is, in the case where the intake air temperature or the engine coolant temperature is low, where the intake air flow rate is lower than the set flow rate, and where the condensed water cannot be blown into the combustion chamber 5 by the intake air, the recirculation of the EGR gas to the intake passage 20 is prohibited. In this way, it is possible to prevent the condensed water from being accumulated in the intake passage 20, and it is thus possible to avoid the misfire caused by the condensed water. In addition, it is possible to ensure favorable driving of the throttle valve 22.

Thus, according to the above embodiment, the engine performance can be improved by securing an opportunity to execute the EGR control while the misfire caused by the condensed water is avoided.

For example, in the above embodiment, the low-temperature upper limit EGR amount described above is set to be equal to or smaller than the maximum value of the normal EGR amount. That is, in the case where the intake air temperature and the engine coolant temperature are the temperatures in the second area X2, the third area X3, the fifth area X5, and the sixth area X6, the maximum value of the EGR amount is reduced to be smaller than that when the intake air temperature and the engine coolant temperature are the temperatures in the first area X1. Accordingly, when the intake air temperature or the engine coolant temperature is low, it is possible to reliably reduce the amount of the condensed water that is produced in the intake passage 20 due to the condensation of the moisture in the EGR gas, and it is thus possible to reliably prevent the misfire caused by the condensed water.

Particularly, when the execution/stop of the EGR control is switched, opening/closing of the EGR valve 43 is switched. Consequently, there is a possibility that the flow of the EGR gas and the flow of the intake air fluctuate to prevent stable engine behavior. In addition, when the engine E is mounted on the vehicle, and the vehicle is traveling in a mountainous area or the like, there is a possibility that the intake air temperature is frequently changed across the first intake air temperature RA1. To handle the above, according to the above embodiment, in the case where the engine E is operated in the low-temperature EGR region A2, the EGR control is continuously executed even when the intake air temperature is changed across the first intake air temperature RA1. As a result, the engine behavior can be stabilized, and thus riding comfort of the vehicle can be improved.

Further particularly, in the above embodiment, when the intake air temperature and the engine coolant temperature are the temperatures in the fourth area X4, the seventh area X7, the eighth area X8, the ninth area X9, or the tenth area X10, and the intake air temperature or the engine coolant temperature is extremely low, the EGR control is prohibited. That is, when there is a possibility that an amount of the condensed water that cannot be blown into the combustion chamber 5 by the intake air is produced, the EGR control is prohibited. Thus, it is possible to reliably prevent the condensed water from being stored in the intake passage 20 while securing the opportunity to execute the EGR control as described above. Further particularly, when the intake air temperature or the engine coolant temperature is extremely low, there is a possibility that the condensed water freezes in the EGR passage 41 and the EGR valve 43 freezes. However, by prohibiting the EGR control as described above, it is possible to prevent the EGR valve 43 from freezing.

Further particularly, in the above embodiment, the target EGR rate at the time when the intake air temperature and the engine coolant temperature are the temperatures in the third area X3 is set to the value that is obtained by linearly interpolating the low-temperature EGR rate and 0 (zero) with respect to the intake air temperature. Accordingly, the target EGR rate and thus the EGR amount at the time when the intake air temperature and the engine coolant temperature are the temperatures in the third area X3 are lower values than the target EGR rate and thus the EGR amount at the time when the intake air temperature and the engine coolant temperature are the temperatures in the second area X2. Thus, when the condensed water is further likely to be produced than the time when the intake air temperature and the engine coolant temperature are the temperatures in the second area X2, it is possible to reduce the amount of the produced condensed water by reducing the amount of the EGR gas.

Further particularly, by the above linear interpolation, while prohibiting the EGR control when the intake air temperature and the engine coolant temperature are in the fourth area X4, it is possible to prevent such a situation where, when the intake air temperature is changed between the fourth area X4 and the second area X2, the EGR rate is changed significantly and the fluctuations in the flows of the intake air and the EGR gas are caused.

Similarly, in the above embodiment, the target EGR rate at the time when the intake air temperature and the engine coolant temperature are the temperatures in the sixth area X6 is set to the value that is obtained by linearly interpolating the low-temperature EGR rate and 0 (zero) with respect to the intake air temperature. Accordingly, it is possible to avoid the recirculation of the large amount of the EGR gas to the intake passage 20 in the state where the condensed water is further likely to be produced, and it is possible to reduce the amount of the condensed water that is produced in the intake passage 20. Further particularly, while prohibiting the EGR control at the time when the intake air temperature and the engine coolant temperature are in the seventh area X7, it is possible to prevent such a situation where, when the intake air temperature is changed between the fifth area X5 and the seventh area X7, the EGR rate is changed significantly and the fluctuations in the flows of the intake air and the EGR gas are caused.

Further particularly, in the above embodiment, the low-temperature EGR region A2 is set and stored in the ECU 80 in advance, and the condition that the engine E is operated in the low-temperature EGR region A2 is set as the condition for executing the EGR control when the intake air temperature and the engine coolant temperature are the temperatures in the second area X2, the third area X3, the fifth area X5, or the sixth area X6. Thus, the ECU 80 can easily determine whether to execute the EGR control by determining whether the engine E is operated in the low-temperature EGR region A2.

### (Modified Examples)

In the above embodiment, the description has been made on the case where it is determined in step S5 whether the engine E is operated in the EGR region A1, and the execution/stop of the EGR control (step S6/step S11) is switched on the basis of this determination. However, the EGR control may be prohibited by omitting this determination step, setting the target EGR rate outside the EGR region A1 to 0 (zero), and controlling the EGR valve 43 to realize this target EGR rate. Similarly, the EGR control may be prohibited by omitting the determinations in step S7 and step S22, setting the target EGR rate outside the low-temperature EGR region A2 to 0 (zero), and controlling the EGR valve 43 to realize this target EGR rate.

In the above embodiment, the description has been made on the case where the low-temperature EGR region A2 is set as the region where the engine speed is higher than the predetermined low-temperature EGR start speed N1 in the region A1_x that is the region on the high side of the engine speed and the engine load from the line L1 in the EGR region A1 and where the intake air flow rate is higher than the set flow rate. However, the low-temperature EGR region A2 may be set in the entire region on the high side of the engine speed and the engine load from the line L1 in the EGR region A1.

Here, the intake air flow rate is increased as the engine speed is increased. In addition, the intake air flow rate is increased as the engine load is increased. Accordingly, even in the case where the low-temperature EGR region A2 is set to satisfy the requirement that the lower limit value of the engine load therein is higher than the lower limit value of the engine load in the EGR region A1, the low-temperature EGR region A2 is set in a region where the intake air flow rate is high in the EGR region A1. Accordingly, in the above embodiment, the description has been made on the case where the low-temperature EGR region A2 is set to satisfy the requirement that the lower limit value of the engine speed in the low-temperature EGR region A2 is higher than the lower limit value of the engine speed in the EGR region A1. However, the low-temperature EGR region A2 may be set to satisfy a requirement that the lower limit value of the engine load is higher than the lower limit value in the EGR region A1 or a requirement that the lower limit values of both the engine load and the engine speed are higher than the lower limit values in the EGR region A1.

In the above embodiment, the description has been made on the case where switching between the execution and the stop of the EGR control at the time when the intake air temperature and the engine coolant temperature are the temperatures in the second area X2, the third area X3, the fifth area X5, or the sixth area X6 is performed on the basis of the determination result of whether the engine E is operated in the low-temperature EGR region A2. However, instead of this determination, the above switching may be performed by calculating the intake air flow rate and then on the basis of a determination on whether the calculated intake air flow rate is equal to or higher than the set flow rate.

In addition, the specific structure such as the number of the cylinders and the like in the engine body 1 and the specific numerical value of each of the temperatures are not limited to those described above.

### [Reference Signs List]

1: engine body
2a: cylinder
5: combustion chamber
20: intake passage
30: exhaust passage
41: EGR passage
42: EGR cooler
43: EGR valve
80: ECU (controller)
SN3: intake air temperature sensor

## Claims

1. An exhaust gas recirculation system (100) for an engine (E) including: an engine body (1) that is formed with a combustion chamber (5); an exhaust passage (30) that is connected to the engine body (1) and through which exhaust gas introduced from the engine body (1) flows; and an intake passage (20) that is connected to the engine body (1) and through which intake air to be introduced into the engine body (1) flows, the exhaust gas recirculation system (100) comprising:
an intake air temperature sensor (SN3) that is configured to detect an intake air temperature as a temperature of the intake air;
an EGR passage (41) that connects the exhaust passage (30) and the intake passage (20) to recirculate EGR gas as a part of the exhaust gas to the intake passage (20);
an EGR valve (43) that is configured to open and/or close the EGR passage (41) to change an EGR amount that is an amount of the EGR gas to be recirculated to the intake passage (20); and
a controller (80) that is configured to execute EGR control for recirculating the EGR gas by opening the EGR valve (43) when the engine (E) is operated in a preset EGR region (A1), wherein
in a case where the intake air temperature that is detected by the intake air temperature sensor (SN3) is lower than a predetermined first set temperature (RA1), the controller (80) is configured to prohibit the EGR control when the engine (E) is operated in the EGR region (A1) under a condition that an intake air flow rate as a flow rate of the intake air flowing through the intake passage (20) is lower than a predetermined set flow rate.

2. The exhaust gas recirculation system (100) according to claim 1, wherein
when the intake air temperature is lower than the first set temperature (RA1), the controller (80) is configured to determine whether the engine (E) is operated in a predetermined low-temperature EGR region (A2) in the EGR region (A1), and execute the EGR control when the engine (E) is operated in the low-temperature EGR region (A2), the low-temperature EGR region (A2) being set in advance in a region where the intake air flow rate is equal to or higher than the set flow rate.

3. The exhaust gas recirculation system (100) according to claim 2, wherein
the low-temperature EGR region (A2) is set so that at least one of a requirement that a lower limit value (N1) of an engine speed in the low-temperature EGR region (A2) is higher than a lower limit value of the engine speed in the EGR region (A1) or a requirement that a lower limit value of an engine load in the low-temperature EGR region (A2) is higher than a lower limit value of the engine load in the EGR region (A1) is satisfied.

4. The exhaust gas recirculation system (100) according to any one of the preceding claims, wherein
during execution of the EGR control, the controller (80) is configured to control the EGR valve (43) so that a maximum value of the EGR amount when the intake air temperature is lower than the first set temperature (RA1) is smaller than a maximum value of the EGR amount when the intake air temperature is higher than the first set temperature (RA1).

5. The exhaust gas recirculation system (100) according to any one of the preceding claims, wherein
during execution of the EGR control, the controller (80) is configured to control the EGR valve (43) so that the EGR amount when the intake air temperature is lower than a predetermined second set temperature (RA2), which is lower than the first set temperature (RA1), is smaller than the EGR amount when the intake air temperature is equal to or higher than the second set temperature (RA2).

6. The exhaust gas recirculation system (100) according to claim 5, wherein
the controller (80) is configured to prohibit the EGR control when the intake air temperature is lower than a predetermined third set temperature (RA3) that is lower than the second set temperature (RA2).

7. The exhaust gas recirculation system (100) according to any one of the preceding claims, further comprising a coolant temperature sensor (SN2) configured to detect a temperature of an engine coolant,
wherein a lowest intake air temperature (RA3) at which the controller (80) is configured to execute the EGR control when the engine coolant temperature is higher than a predetermined first coolant temperature (RW1) is lower than a lowest intake air temperature (RA2) at which the controller (80) is configured to execute the EGR control when the engine coolant temperature is equal to or lower than the first coolant temperature (RW1).

8. The exhaust gas recirculation system (100) according to claim 7, wherein
a lowest intake air temperature (RA2) at which the controller (80) is configured to execute the EGR control when the engine coolant temperature is equal to or lower than the first coolant temperature (RW1) and higher than a predetermined second coolant temperature (RW2) is lower than a lowest intake air temperature at which the controller (80) is configured to execute the EGR control when the engine coolant temperature is equal to or lower than the second coolant temperature (RW2).

9. The exhaust gas recirculation system (100) according to claim 8, wherein
the controller (80) is configured to prohibit the EGR control when the engine coolant temperature is equal to or lower than the second coolant temperature (RW2).

10. An engine (E) comprising:
an engine body (1) that is formed with a combustion chamber (5);
an exhaust passage (30) that is connected to the engine body (1) and through which exhaust gas introduced from the engine body (1) flows;
an intake passage (20) that is connected to the engine body (1) and through which intake air to be introduced into the engine body (1) flows; and
the exhaust gas recirculation system (100) according to any one of the preceding claims.

11. A method of controlling an exhaust gas recirculation system (100) for an engine (E) including: an engine body (1) that is formed with a combustion chamber (5); an exhaust passage (30) that is connected to the engine body (1) and through which exhaust gas introduced from the engine body (1) flows; and an intake passage (20) that is connected to the engine body (1) and through which intake air to be introduced into the engine body (1) flows, the exhaust gas recirculation system (100) comprising:
an intake air temperature sensor (SN3) that is configured to detect an intake air temperature as a temperature of the intake air;
an EGR passage (41) that connects the exhaust passage (30) and the intake passage (20) to recirculate EGR gas as a part of the exhaust gas to the intake passage (20);
an EGR valve (43) that is configured to open and/or close the EGR passage (41) to change an EGR amount that is an amount of the EGR gas to be recirculated to the intake passage (20); and
a controller (80) that is configured to execute EGR control for recirculating the EGR gas by opening the EGR valve (43) when the engine (E) is operated in a preset EGR region (A1), the method comprising:
in a case where the intake air temperature that is detected by the intake air temperature sensor (SN3) is lower than a predetermined first set temperature (RA1), prohibiting the EGR control when the engine (E) is operated in the EGR region (A1) under a condition that an intake air flow rate as a flow rate of the intake air flowing through the intake passage (20) is lower than a predetermined set flow rate.

12. The method according to claim 11, further comprising
when the intake air temperature is lower than the first set temperature (RA1), executing the EGR control when the engine (E) is operated in a region where the intake air flow rate is equal to or higher than the set flow rate.

13. The method according to claim 12, wherein
in the region where the intake air flow rate is equal to or higher than the set flow rate, a lower limit value of an engine speed is higher than a lower limit value (N1) of the engine speed in the EGR region (A1) and/or a lower limit value of an engine load is higher than a lower limit value of the engine load in the EGR region (A1).

14. The method according to any one of claims 11 to 13, further comprising,
during execution of the EGR control, controlling the EGR valve (43) so that a maximum value of the EGR amount when the intake air temperature is lower than the first set temperature (RA1) is smaller than a maximum value of the EGR amount when the intake air temperature is higher than the first set temperature (RA1).

15. The method according to any one of claims 11 to 14, further comprising,
during execution of the EGR control, controlling the EGR valve (43) so that the EGR amount when the intake air temperature is lower than a predetermined second set temperature (RA2), which is lower than the first set temperature (RA1), is smaller than the EGR amount when the intake air temperature is equal to or higher than the second set temperature (RA2).
